Europäisches Patentamt

European Patent Office

Office européen des brevets

(11) Veröffentlichungsnummer: **0 386 586**
**A2**

# (12) EUROPÄISCHE PATENTANMELDUNG

(21) Anmeldenummer: **90103763.0**

(22) Anmeldetag: **26.02.90**

(51) Int. Cl.⁵: **H05B 7/10**

(30) Priorität: **06.03.89 DE 3907129**

(43) Veröffentlichungstag der Anmeldung:
**12.09.90 Patentblatt 90/37**

(84) Benannte Vertragsstaaten:
**AT BE DE ES FR GB GR IT LU SE**

(71) Anmelder: **Fuchs Technology AG**
**Chamerstrasse 50 (c/o Gestinor Services**
**AG)**
**CH-6300 Zug(CH)**

(72) Erfinder: **Ehle, Joachim**
**Spitzenbergstrasse 7b**
**D-7606 Lautenbach(DE)**
Erfinder: **Fuchs, Gerhard**
**Eschigweg 1**
**D-7640 Kehl-Bodersweier(DE)**

(74) Vertreter: **Blumbach Weser Bergen Kramer**
**Zwirner Hoffmann Patentanwälte**
**Radeckestrasse 43**
**D-8000 München 60(DE)**

(54) **Lichtbogenofen.**

(57) Bei einem Lichtbogenofen soll in einfach herzustellender und durchzuführender Weise während eines Kippens des Ofengefäßes ein Kontakt der Elektroden mit dem Deckel im Bereich der Elektrodendurchführungen vermieden werden.

Das Portal (11) ist kippfest und in horizontaler Richtung bewegbar mit einer Drehachse (13) im Abstand von einer Kippebene angeordnet. Über eine Koppeleinrichtung (37, 39, 41) zwischen Ofengefäß (5) und Portal (11) ist eine Kippbewegung des Ofengefäßes (5) in eine Drehbewegung des Portals (11) so umsetzbar, daß während eines Kippens des Ofengefäßes (5) die in die Elektrodendurchführungen (31) eingreifenden Abschnitte der Elektroden (23, 25 und 27) in horizontaler Richtung im wesentlichen entsprechend der horizontalen Verschiebung der Elektrodendurchführungen (31) mitgeführt werden.

Es sind sowohl mechanisch als auch elektrisch wirkende Koppeleinrichtungen einfach einsetzbar. Es können beispielsweise auch bereits installierte Lichtbogenöfen in einfacher Weise mit einer erfindungsgemäßen Koppeleinrichtung nachgerüstet werden.

Fig. 1

# LICHTBOGENOFEN

Die Erfindung bezieht sich auf einen Lichtbogenofen gemäß dem Oberbegriff des Patentanspruchs 1.

Ein derartiger Lichtbogenofen wird über die Walzwiege um einen vorgebbaren Winkel mit vorgebbarem Richtungssinn beispielsweise dann gekippt, wenn ein Abstich oder eine Entfernung von Schlacken erfolgen soll. Bei einem derartigen Kippen ist es notwendig, daß ein Kontakt der Elektroden mit dem Deckel im Bereich der Elektrodendurchführungen vermieden wird.

Erfolgt ein Kippen in Zusammenhang mit einem Abstich, dann kann vorab die Halterung mit den Elektroden in vertikaler Richtung so bewegt werden, daß die Elektroden in einem Bereich oberhalb der Elektrodendurchführungen angeordnet sind. Der Deckel kann dabei über eine an dem Portal angeordnete Hubvorrichtung von dem Ofengefäß abgehoben und anschließend aus dessen Bereich verfahren werden.

Für ein Kippen zum Entfernen von Schlacken würde das Herausziehen der Elektroden aus dem Ofengefäß und dem Deckel einen unzulässigen Aufwand zur Folge haben und es könnte die Qualität einer in dem Ofengefäß befindlichen Schmelze bzw. die Kontinuität des Betriebs des Lichtofens beeinträchtigt werden.

Um die Elektroden während einer derartigen Kippbewegung entsprechend der Bewegung des Deckels bzw. der Elektroden durchführungen mitzuführen, ist es bereits bekannt, das Ofengefäß mit dem Portal auf einer gemeinsamen Wiegeplattform anzuordnen. Das Portal wird während eines Kippens des Ofensgefäßes synchron mitgekippt, so daß eine Relativverschiebung zwischen den Elektroden und den Elektrodendurchführungen vermieden ist. Die Anordnung des Portals auf einer Wiegeplattform hat aber den Nachteil, daß diese entsprechend groß ausgebildet werden muß, und daß während eines Kippens auch die Masse des Portals mit bewegt werden muß.

Dies gilt entsprechend für eine andere Ausführung, gemäß der das Portal getrennt von dem Ofengefäß, aber gleichfalls kippbar, angeordnet ist und während des Kippens des Ofengefäßes über eine zwischen dem Ofengefäß und dem Portal angeordnete Klauenvorrichtung mitgekippt wird.

Es ist ferner bei einem Lichtbogenofen mit kippfestem und lediglich drehbarem Portal bekannt, den Deckel so anzuordnen, daß er während des Kippens um einen Winkel von etwa ± 5% in horizontaler Richtung nicht mitbewegt wird. Dazu ist es erforderlich, daß der Drehpunkt der Wälzwiege über ein Räderwerk in entsprechender Weise festgelegt wird. Damit ist sichergestellt, daß während eines Kippens in diesem Winkelbereich im wesentlichen keine Relativverschiebung zwischen den Elektroden und den Elektrodendurchführungen auftritt. Die zusätzliche Anordnung eines Räderwerkes führt jedoch zu einem vergrößerten Herstellungsaufwand und kann beispielsweise aufgrund von Verschmutzungen oder Verschleiß die Betriebssicherheit herabsetzen.

Der Erfindung liegt die Aufgabe zugrunde, einen gattungsgemäßen Lichtbogenofen so auszubilden, daß in einfacher und betriebssicherer Weise während eines Kippens des Ofengefässes ein Kontakt der in das Ofengefäß ragenden Elektroden mit dem Deckel, im Bereich der Elektrodendurchführungen verhindert ist.

Diese Aufgabe ist bei einem Lichtbogenofen der genannten Gattung durch die kennzeichnenden Merkmale gelöst. Vorteilhafte Ausgestaltungen der Erfindung sind den Unteransprüchen zu entnehmen.

Um bei nicht mitkippendem Portal während des Kippens des Ofengefäßes und des mit diesem mitgekippten Deckels einen Kontakt der in die Elektrodendurchführungen eingreifenden Abschnitte der Elektroden mit dem Deckel zu verhindern, wird das Portal, ausgehend von der Kippbewegung des Ofengefäßes, über eine Koppeleinrichtung horizontal bewegt. Abhängig von dem Kippwinkel des Ofengefäßes bzw. der sich daraus ergebenden Verschiebung der Elektrodendurchführungen in horizontaler Richtung und der Ausbildung und der Anordnung der Koppeleinrichtung, ist dabei lediglich sicherzustellen, daß die Elektroden über ihre Halterung durch die Horizontalbewegung des Portals so mitbewegt werden, daß die Verschiebung der in die Elektrodendurchführungen eingreifenden Abschnitte der Elektroden in horizontaler Richtung im wesentlichen der Verschiebung der Elektrodendurchführungen aufgrund des Kippens entspricht.

Die erfindungsgemäße Lösung führt zu einer, im Aufbau einfachen und betriebssicheren Kopplung der Kippbewegung des Ofengefäßes bzw. des Deckels mit einer Horizontalbewegung des Portals.

Es hat sich als vorteilhaft herausgestellt, daß die Koppeleinrichtung so abgestimmt ist, daß für Kippwinkel ω in einem Bereich von etwa ± 6° eine im wesentlichen fehlerfreie Mitführung erfolg. Dadurch ist sichergestellt, daß beim Kippen für eine Entfernung von Schlacken, die in die Elektrodendurchführungen eingreifenden Abschnitte der Elektroden in horizontaler Richtung entsprechend den Elektrodendurchführungen mitbewegt werden.

Das horizontal bewegbare Portal kann als linear verfahrbares Portal oder als Drehportal ausgebildet sein.

Bei einer bevorzugten Ausführungsform weist die Koppeleinrichtung der Kippbewegung des Ofengefäßes und der Horizontalbewegung des Portals zugeordnete Meßeinrichtungen und eine Stelleinrichtung für ein Verfahren oder ein Verdrehen des Portals auf. Über Meßwerte betreffend die Kippbewegung ist die Stelleinrichtung für eine Horizontalverschiebung des Portals beispielsweise elektronisch in einfacher Weise steuerbar, wobei Meßwerte für die Bewegung des Portals, beispielsweise für eine Überwachung oder eine Endbegrenzung der Bewegung eingesetzt werden können. Als Meßeinrichtungen sind beispielsweise Kippwinkelgeber und bei einem Drehportal Drehwinkelgeber einsetzbar. Wird die Wälzwiege zum Kippen über eine Zylinder-Kolbenanordnung betätigt, dann kann der Kippwinkel auch in einfacher Weise über eine Messung des Kolbenhubes erfaßt werden.

Bei einer weiteren bevorzugten Ausführungsform weist die Koppeleinrichtung eine zwischen Ofengefäß und Portal angeordnete Kulissenführung zur mechanischen Umsetzung einer Kippbewegung des Ofengefäßes in eine Horizontalbewegung des Portals auf. Über die dem Ofengefäß und dem Portal zugeordnete Kulissenführung läßt sich, in relativ einfacher Weise, eine zwangsweise Koppelung zwischen einer Kippbewegung des Ofengefäßes und einer Horizontalbewegung des Portals herstellen.

Beim Einsatz einer Kulissenführung als Koppeleinrichtung zu einem Drehportal hat es sich als vorteilhaft erwiesen, daß die Kulissenführung in einer Höhe $Z_0$ in bezug auf die Wälzwiege wirkt, die gemäß der im Anspruch 7 angegebenen Beziehung ermittelt werden kann.

Bei Einsatz einer Kulissenführung als Koppeleinrichtung hat es sich ferner als vorteilhaft erwiesen, daß die Kulissenführung eine langlochförmig ausgebildete, im wesentlichen vertikal verlaufende Führung aufweist, die mit dem Ofengefäß oder dem Portal verbunden ist, und in die ein mit dem Portal bzw. dem Ofengefäß verbundener Kulissenstein eingreift. Durch einen, in eine langlochförmig ausgebildete Führung eingreifenden Kulissenstein ist eine Kippbewegung des Ofengefäßes in einfach herzustellender, betriebssicherer Weise mit einer horizontalen Linearbewegung oder Schwenkbewegung des Portals koppelbar. Für eine mechanische Koppelung sind die beiden Elemente der Kulissenführung, nämlich die Führung und der Kulissenstein wechselseitig unverschiebbar mit dem Ofengefäß bzw. dem Portal zu verbinden. Dadurch, daß die Führung im wesentlichen vertikal verlaufend ausgebildet ist, ist sichergestellt, daß während eines Kippens lediglich die dadurch verursachte Verschiebung der Elektrodendurchführungen in horizontaler Richtung in eine zu einer entsprechenden Bewegung der in die Elektrodendurchführungen ragenden Abschnitte der Elektroden führende, Horizontalbewegung des Portals umgesetzt wird. Neben der Zwangsführung in horizontaler Richtung ist der Kulissenstein in vertikaler Richtung in der Führung frei bewegbar. Durch die Kulissenführung werden auf das Portal somit nur zu einer Längs- bzw. Drehbewegung führende Kräfte, nicht aber Kräfte in vertikaler Richtung übertragen.

Bei einer weiteren bevorzugten Ausführungsform ist die Koppeleinrichtung für ein Kippen des Ofengefäßes mit größeren Kippwinkeln $\omega$ von beispielsweise 15° bis 25° abschaltbar bzw. ausrückbar. Es ist damit sichergestellt, daß bei einem Kippen zur Vorbereitung bzw. Durchführung eines Abstiches mit Kippwinkeln $\omega$ von beispielsweise 15° bis 25°, bei dem die Elektroden aus dem Ofengefäß und den Elektrodendurchführungen ausgefahren sind, ein, dann nicht mehr erforderliches Mitführen des Portals unterbleibt.

Zwei Ausführungsbeispiele der Erfindung werden nachfolgend anhand der Zeichnung mit weiteren Einzelheiten erläutert.

Es zeigen anhand schematischer Darstellungen

Fig. 1 eine Ansicht eines ersten Ausführungsbeispiel eines erfindungsgemäßen Lichtbogenofens in Kipprichtung, wobei die Elektroden auf einem Drehportal angeordnet sind,

Fig. 2 eine Draufsicht auf den Lichtbogenofen nach Fig. 1,

Fig. 3 einen unvollständigen Schnitt III-III nach Fig. 2 mit einem Ofengefäß in einer Ruhelage und in einer Kippstellung,

Fig. 4 einen vergrößert dargestellten Wälzradius für einen Lichtbogenofen nach Fig. 1 bis 3, mit in ein XZ-Koordinaten-System eingezeichneten Koordinaten für eine Kulissenführung und

Fig. 5 eine der Fig. 1 entsprechende Ansicht eines zweiten Ausführungsbeispiels mit einem linear verfahrbaren Portal.

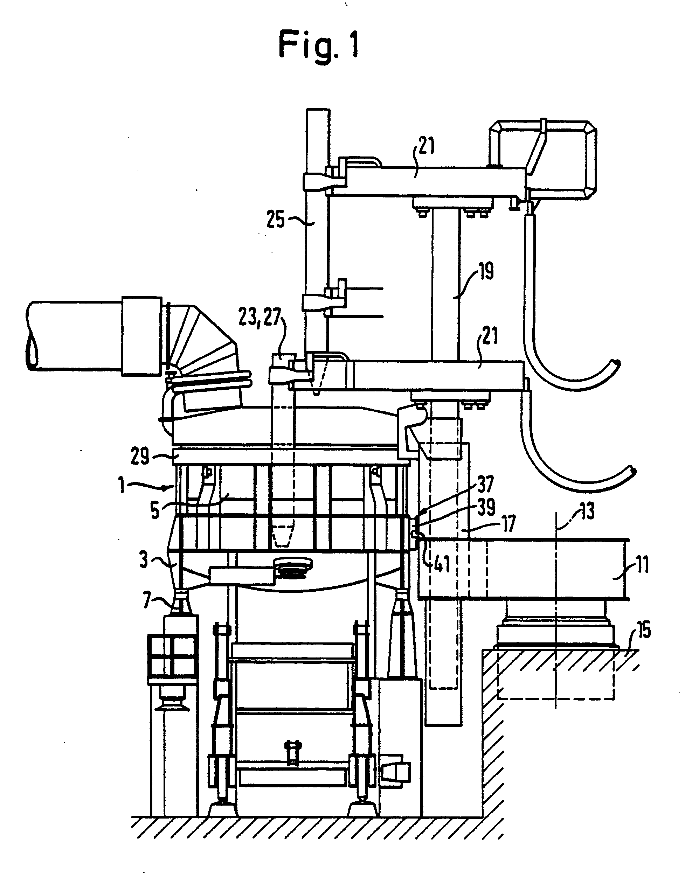

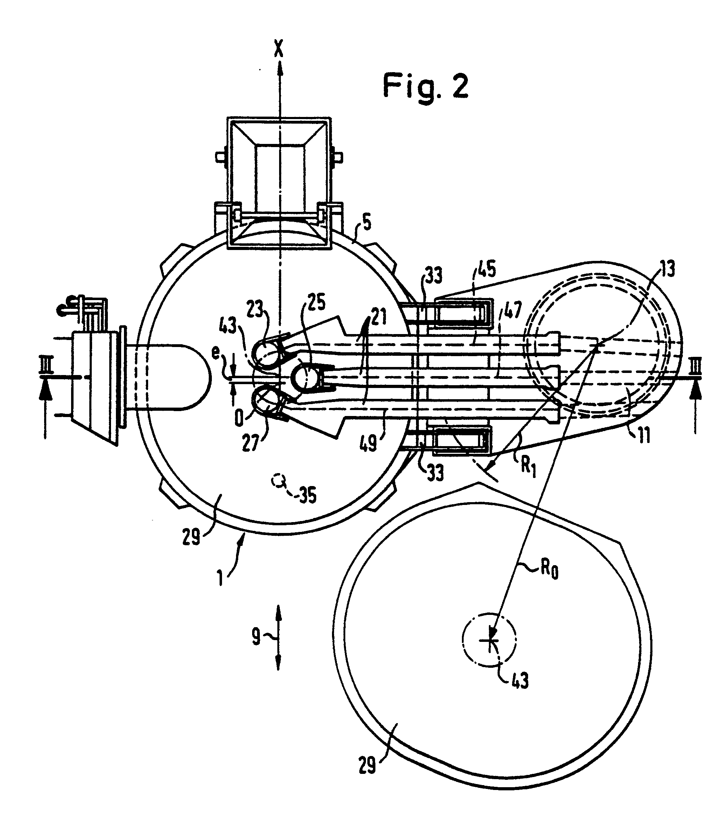

Ein insgesamt mit 1 bezeichneter Lichtbogenofen eines ersten Ausführungsbeispiels (Fig. 1 bis 4) weist ein auf einer Wälzwiege 3 angeordnetes Ofengefäß 5 auf. Durch Abwälzen der Wälzwiege 3 auf einem Fundament 7 ist sie zusammen mit dem Ofengefäß 5 kippbar. Die Kipprichtung ist durch einen Doppelpfeil 9 (Fig. 2) angegeben; ein Kippen ist dabei in beiden, durch die Pfeile gekennzeichneten Richtungen möglich.

Im seitlichen Abstand von der den Pfeil 9 beinhaltenden Kippebene ist neben dem Ofengefäß ein Portal 11 kippfest und um eine Drehachse 13 drehbar auf einem Fundament 15 angeordnet. An dem Portal 11 sind drei Zylinder 17 angeordnet, in denen jeweils ein Kolben 19 in vertikaler Richtung verschiebbar geführt ist. Mit den oberen freien Enden der Kolben 19 sind jeweils Tragarme 21 für drei Lichtbogenelektroden 23, 25 und 27 befestigt. Die Elektroden 23, 25, 27 verlaufen im Abstand parallel zu den Kolben 19 und ragen in der Betriebsstellung des Lichtbogenofens 1 in das Ofengefäß 5.

Das Ofengefäß 5 ist in der Betriebsstellung des Lichtbogenofens 1 durch einen Deckel 29 verschlossen, der jeder Elektrode 23, 25, 27 zugeordnet eine Elektrodendurchführung 31 aufweist. Das Spiel zwischen einer Elektrode 23, 25, 27 und der jeweils zugehörigen Elektrodendurchführung 31 beträgt für übliche Elektrodenabmessungen beispielsweise 50 mm. Durch Ausfahren der Kolben 19 sind die Halterungen 21 nach oben in eine Halterung bewegbar, in der die Elektroden 23, 25, 27 oberhalb des Ofengefäßes 5 und des Deckels 29 angeordnet sind.

Auf dem Portal 21 ist eine Hub- und Schwenkeinrichtung 33 für den Deckel 29 angebracht, mit der der Deckel 29 wie beispielsweise in der EP-A-203 339 beschrieben, von dem oberen Rand des Ofengefäßes 5 abgehoben werden kann. Der Deckel 29 kann dann durch Verdrehen des Portals 11 in eine, in Fig. 2 eingezeichnete Stellung außerhalb des Ofengefäßes 5 geschwenkt werden.

Für ein Entfernen von Schlacken bzw. einen Abstich über eine Abstichöffnung 35 im Boden des Ofengefäßes 5 ist das Ofengefäß 5 durch Abwälzen der Wälzwiege 3 auf dem Fundament 7 um einen vorgebbaren Winkel ω in Richtung des Pfeiles 9 kippbar. Für Kippwinkel in einem Bereich von etwa ω = ± 6°, wie sie für das Entfernen von Schlacken erforderlich sind, ist vorgesehen, daß die Elektroden 23, 25 und 27 in ihrer Betriebsstellung in dem Ofengefäß 5 verbleiben. Damit sind Betriebsunterbrechungen, die gegebenenfalls auch zu einer Herabsetzung der Qualität führen können, während des Entfernens von Schlacken vermieden. Während eines derartigen Kippens des Ofengefäßes 5 verbleibt der Deckel 29 in seiner Betriebsstellung auf dem Ofengefäß 5 und wird deshalb mit diesem gekippt. Bei einem Verbleiben der Elektroden 23, 25 und 27 in dem Ofengefäß 5 bzw. entsprechender Abschnitte der Elektroden 23, 25 und 27 in den jeweils zugeordneten Elektrodendurchführungen 31 ist sicherzustellen, daß aufgrund einer Verschiebung des Deckels 29 mit den Elektrodendurchführungen 31 infolge einer Kippbewegung, ein Kontakt zwischen den im Bereich der Elektrodendurchführungen 31 befindlichen Abschnitten der Elektroden 23, 25 und 27 und dem Deckel 29 vermieden ist. Dies kann im Bereich der genannten Kippwinkel ω von etwa ± 6° gemäß der Erfindung in einfacher Weise dadurch erfolgen, daß zwischen Ofengefäß 5 und Portal 11 eine insgesamt mit 37 bezeichnete Koppeleinrichtung angeordnet ist, über die eine Kippbewegung des Ofengefäßes 5 in eine Drehbewegung des Portals 11 so umsetzbar ist, daß während eines Kippens des Ofengefäßes 5 die in die Elektrodendurchführungen 31 eingreifenden Abschnitte der Elektroden 23, 25 und 27 in horizontaler Richtung, im wesentlichen entsprechend der Bewegung der Elektrodendurchführungen 31, mitgeführt werden.

Die in Fig. 1 schematisch dargestellte Koppeleinrichtung 37 weist, für eine mechanische Umsetzung einer Kippbewegung des Ofengefäßes 5 in eine Drehbewegung des Portals 11 um seine Drehachse 13, eine mit dem Ofengefäß 5 verbundene, langlochförmig oder durch zwei benachbarte Leisten gebildete und im wesentlichen vertikal verlaufende Führung 39 auf, in die ein mit dem Portal 11 verbundener Kulissenstein 41 eingreift. Es kann aber auch, bei gleichbleibender Wirkung der Koppeleinrichtung 37, die Führung 39 mit dem Portal 11 und der in sie eingreifende Kulissenstein 41 mit dem Ofengefäß 5 verbunden sein.

In der dargestellten Weise wird während eines Kippens des Ofengefäßes 5 mit dem Deckel 29 und den darin befindlichen Elektrodendurchführungen 31 die Führung 39 gleichfalls aus ihrer senkrechten Ruhestellung heraus um den Kippwinkel ω gekippt. Durch die im wesentlichen vertikale Anordnung der Führung 39 kann sich der mit dem Portal 11 verbundene Kulissenstein 41 entsprechend der Kippbewegung in im wesentlichen vertikaler Richtung frei in der Führung 39 bewegen. Durch Anlage des Kulissensteins 41 an einer, durch den Richtungssinn einer Kippbewegung gemäß dem Pfeil 9 vorgegebenen Wandung der Führung 39, wird gleichzeitig mit einem Kippen des Ofengefäßes 5 das Portal 11, mit den Tragarmen 21 und den darin gehaltenen Elektroden 23, 25 und 27, um die Drehachse 13 verdreht. Die Koppeleinrichtung 37 kann dabei so angeordnet und abgestimmt sein, daß in dem angegebenen Bereich von Kippwinkeln ω von etwa ± 6° eine, im wesentlichen einer Horizontalverschiebung der Elektrodendurchführungen 31 entsprechende Mitführung der in diese eingreifenden Abschnitte der Elektroden 23, 25 und 27 erfolgt. Damit ist sichergestellt, daß während eines Kippens des Ofengefäßes 5 mit dem Deckel 29 im wesentlichen keine Relativverschiebung in horizontaler Richtung zwischen den Elektrodendurchführungen 31 und den in diese eingreifenden Abschnitten der Elektroden 23, 25 und 27 auftreten kann. Ein die Betriebssicherheit des Lichtbogenofens 1 beeinträchtigender Kontakt zwischen einer der Elektroden 23, 25 und 27 und dem Deckel 29 im Bereich der jeweils zugeordneten Elektrodendurchführung 31 ist somit in sicherer Weise verhindert.

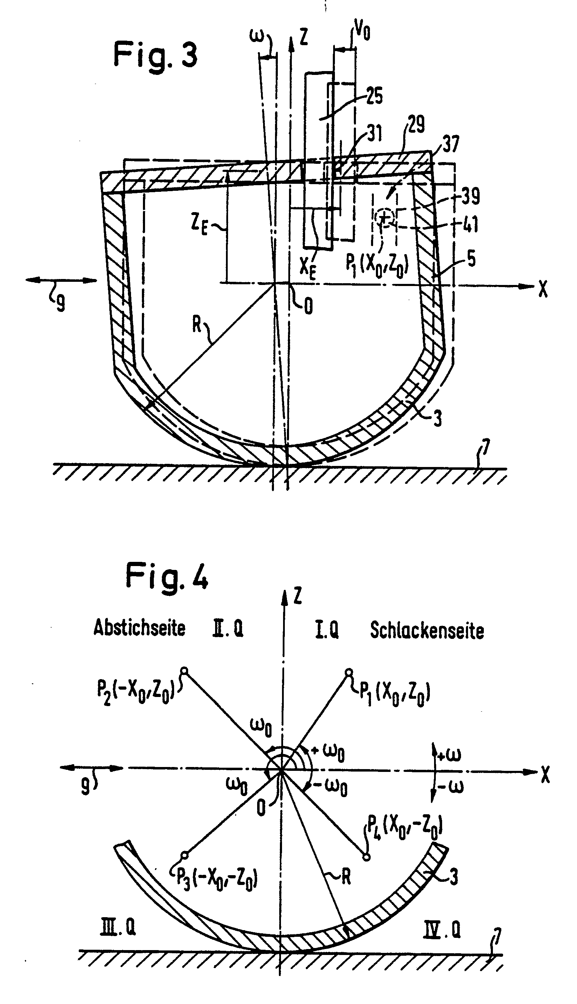

Für möglichst geringe Abweichungen zwischen der Horizontalverschiebung der Elektrodendurchführungen 31 aufgrund einer Kippbewegung des Ofengefäßes 5 mit dem Deckel 29 und den in jeweils eine zugeordnete Elektrodendurchführung 31 eingreifenden Abschnitten der Elektroden 23, 25 und 27 kann die Kulissenführung 39, 41 an einem Punkt $P_1$, $P_2$, $P_3$, oder $P_4$, mit einer Höhe $Z_0$ in Bezug auf ein XZ-Koordinatensystem (Fig.4) wirken, dessen Ursprung 0 mit dem Krümmungsmittelpunkt der Wälzwiege 3 zusammenfällt und bei dem die X-Achse in einer Kipprichtung in Richtung von der Abstichöffnung 35 und die Z-Achse senkrecht dazu in Richtung zu dem Deckel 29 verläuft. Die Höhe $Z_0$ ist dabei so festgelegt, daß eine Differenz F bei Anordnung der Kulissenführung 39, 41 in einem I. oder IV. Quadranten (Fig. 4) gemäß der näherungsweisen Beziehung

$$F = -X_0 + \sqrt{X_0{}^2 + Z_0{}^2} \cdot \cos[\text{arc } \tan(Z_0/X_0) + \omega]$$
$$-R \cdot \pi \cdot \omega/180° - V_0 \cdot R_1/R_0$$

und bei einer Anordnung der Kulissenführung 39, 41 in einem II. oder III. Quadranten (Fig. 4) gemäß der näherungsweisen Beziehung

$$F = -X_0 + \sqrt{X_0{}^2 + Z_0{}^2} \cdot \cos[\text{arc } \tan(Z_0/X_0) + 180°$$
$$+\omega] - R \cdot \pi \cdot \omega/180° - V_0 \cdot R_1/R_0$$

zu einem Minimum wird, wobei die Formelzeichen folgende Größen bezeichnen

$X_0$ und $Z_0$ sind die Koordinaten des Angriffspunktes $P_1$, $P_2$, $P_3$, $P_4$ der Kulissenführung 39, 41 in ihrer Ruhelage in dem XZ-Koordinatensystem, dessen Ursprung 0 mit dem Krümmungsmittelpunkt der Wälzwiege zusammenfällt,

$\omega_0$ ist der zwischen einer Geraden durch den Ursprung 0 sowie jeweils einem der Punkte $P_1$ bis $P_4$ und der X-Achse verlaufende Winkel in Grad,

$\omega$ ist der Kippwinkel in Grad,

R ist der Radius der Wälzwiege (3),

$V_0$ ist eine Verschiebung einer Elektrodendurchführung 31 in horizontaler Richtung aufgrund eines Kippwinkels $\omega$,

$R_0$ ist der Abstand zwischen der Drehachse 13 des Portals 11 und dem Mittelpunkt 43 zwischen den Mittelachsen der Elektroden 23, 25, 27 und

$R_1$ ist der Abstand zwischen der Drehachse 13 des Portals 11 und jeweils einem der Angriffspunkte $P_1$, $P_2$, $P_3$, $P_4$ der Kulissenführung 39, 41 an dem Ofengefäß 5.

Ausgehend von dem in Fig. 3 und 4 eingezeichneten X, Z-Koordinatensystem und den in Fig. 4 für jeden Quadranten I bis IV des Koordinatensystem eingezeichneten Koordinaten $X_0$, $Z_0$ eines Angriffspunktes $P_1$, $P_2$, $P_3$, $P_4$, der Kulissenführung 39, 41 in ihrer Ruhelage, kommt den Ausdrücken in den obigen näherungsweisen Beziehungen für Differenzen F folgende Bedeutung zu.

Der sich auf die Ruhelage beziehenden Koordinate $X_0$ folgende erste Ausdruck gibt die neue Koordinate für diesen Punkt in X-Richtung an, die aufgrund einer reinen Drehung um einen Kippwinkel $\omega$ erreicht wird. Der Ausdruck "arc $\tan(Z_0/X_0)$" steht dabei für den Winkel, um den eine von dem Koordinatenursprung zu einem Angriffspunkt $X_0$, $Z_0$ der Kulissenführung 39, 41 führende Verbindungsgerade $OP_1$, $OP_2$, $OP_3$, bzw. $OP_4$ gegenüber der X-

Achse geneigt ist. Das dem Kosinus zugeordnete Argument betrifft somit den Winkel $\omega_1$, um den, abhängig von dem jeweiligen Quadranten des Koordinatensystems nach Fig. 4 in dem ein betreffender Punkt $P_1$ bis $P_4$ angeordnet ist, eine Verbindungslinie $OP_1$ bis $OP_4$ nach einem Kippen der Wälzwiege 3, mit dem Wälzradius R, gegenüber der X-Achse geneigt ist. Der Koordinatenursprung 0 ist dabei so angeordnet, daß er mit dem Krümmungsmittelpunkt der Wälzwiege 3 übereinstimmt.

Der Ausdruck "$R \cdot \pi\omega/180°$" kennzeichnet die Verschiebung in X-Richtung, um die die Wälzwiege 3 während eines Kippens um den Kippwinkel $\omega$ auf dem Fundament 7 abrollt.

Der letzte Ausdruck in der Beziehung für die Differenz F "$V_0 \cdot R_1/R_0$" ergibt die auf den Angriffspunkt $P_1$ bis $P_4$ der Kulissenführung 39, 41 bezogene Verschiebung, die erforderlich ist, um während eines Kippens die in Elektrodendurchführungen 31 eingreifenden Abschnitte der Elektroden 23, 25 und 27 in horizontaler Richtung mit den Elektrodendurchführungen 31 mitzuführen. Ausgangspunkt dafür ist die bei einem Kippwinkel $\omega$ erforderliche Mitführung bzw. Verschiebung einer Elektrode Vo, wie sie in Fig. 3 für die Elektrode 23 eingezeichnet ist. Wie dort dargestellt, bleibt aufgrund der Verschiebung $V_0$ der Elektrode 23 das Spiel gegenüber der Elektrodendurchführung 31 während des Kippens im wesentlichen erhalten. Ein derartiges Spiel zwischen einer Elektrode 23, 25 und 27 und der zugehörigen Elektrodendurchführung 31 kann beispielsweise in einer Größe von etwa 50 mm vorgegeben sein.

Eine Mitnahme des Portals 11 während eines Kippens des Ofengefäßes 5 über die Kulissenführung 39, 41 hat zur Folge, daß der Mittelpunkt 43, zu dem die Mittelachsen der Elektroden 23, 25 und 27 jeweils den gleichen Abstand aufweisen, wie in Fig. 2 dargestellt, auf einer Kreisbahn mit Radius $R_0$ bewegt wird. Der Radius $R_0$ entspricht dabei dem Abstand zwischen der Drehachse 13 des Portals 11 und dem Mittelpunkt 43. Um die Verschiebung $V_0$ des Mittelpunktes 43, die sich auf die Kreisbahn mit Radius $R_0$ bezieht auf eine Kreisbahn mit Radius $R_1$ umzurechnen, wird die Verschiebung $V_0$ mit dem Verhältnis der Radien $R_1/R_0$ gewichtet. Der Radius $R_1$ steht dabei, wie in Fig. 2 angegeben, für den Abstand der Drehachse 13 des Portals 11 zu dem Angriffspunkt $P_1$, $P_2$, $P_3$, $P_4$ der Kulissenführung 39, 41.

Die Differenz F gibt somit die Abweichung zwischen der auf die Bewegungsbahn mit Radius $R_1$ der Kulissenführung 39, 41 bezogenen Verschiebung $V_0$ des Mittelpunktes 43 auf einer Bewegungsbahn mit Radius $R_0$ und der sich aufgrund eines Kippens mit einem Kippwinkel $\omega$ ergebenden Verschiebung eines Eingriffspunktes $P_1$ bis $P_4$ der Kulissenführung 39, 41 an. Für eine, im wesentlichen der Horizontalverschiebung der Elektrodendurchführungen 31 entsprechende Mitnahme der Elektroden 23, 25 und 27 muß die Differenz F einen Wert annähernd 0 bzw. ein Minimum erreichen. Über eine Minimierungsrechnung können Werte von $X_0$ und $Z_0$ ermittelt werden, die dieser Forderung entsprechen.

Für ein Berechnungsbeispiel mit R = 1500 mm, $R_0$ = 6700 mm, $R_1$ = 2500 mm, einer vorgegebenen Verschiebung $V_0$ von -411,1 mm bei $\omega$ = + 5° und einer konstant gehaltenen Koordinate $X_0$ = 700 mm für einen, im I. Quadranten gelegenen Eingriffspunkt $P_1$ für die Kulissenführung 39, 41 ergeben sich abhängig von beipielsweise durch eine trial-and-error-Berechnung ermittelte Werte von $Z_0$ folgende Werte für Differenzen F: F = -0,038 mm bei $Z_0$ = 932 mm und F = 0,078 mm bei $Z_0$ = 978 mm. Die letztgenannte Differenz F wurde ausgehend von einem Wert $V_0$ = 408,5 mm und einem Kippwinkel $\omega$ = -5° ermittelt. Als optimaler Wert für $Z_0$ ist der Mittelwert $Z_0$ = 955 mm der beiden oben stehenden Werte für $Z_0$ für eine konstruktive Ausgestaltung vorgebbar. Durch verändern von $X_0$, das für das oben stehende Berechnungsbeispiel konstant gehalten wurde, kann gegebenenfalls eine weitere Optimierung für die Koordinaten $X_0$, $Z_0$ eines Eingriffspunktes $P_1$ bis $P_4$ der Kulissenführung 39, 41 erreicht werden.

Bei der Berechnung von Werten für Differenzen F ist gegebenenfalls darauf zu achten, daß für $X_0$ allenfalls ein kleiner Zahlenwert, nicht aber der Wert $X_0$ = 0 eingesetzt werden darf.

In einem weiteren Berechnungsbeispiel werden zunächst Koordinatenverschiebungen der Elektrodendurchführungen 31 in X- und Z-Richtung aufgrund eines Kippens der Wälzwiege 3 mit einem Kippwinkel $\omega$ von 5° und -5° ermittelt.

Die Koordinaten $X_E$ und $Z_E$ bezeichnen dabei die Ausgangs- bzw. Ruhelage eines Mittelpunktes einer jeweils einer der Elektroden 23, 25 und 27 zugeordneten Elektrodendurchführung 31. Aufgrund der gemeinsamen Höhe der Elektrodendurchführungen 31 in dem Deckel 29 haben diese Mittelpunkte der Elektrodendurchführungen 31 die gemeinsame Koordinate $Z_E$ mit einem für das Berechnungsbeispiel vorgegebenen Wert $Z_E$ = 3200,0 mm. Mit $\omega_E$ ist ferner der Winkel einer durch den Ursprung des XZ-Koordinatensystems (Fig.4) und den Mittelpunkt einer Elektrodendurchführung 31 gehenden Geraden gegenüber der X-Achse bezeichnet. Für den Radius der Wälzwiege 3 ist ferner ein Wert R = 1500 mm angenommen.

Für die im I. Quadranten liegende Elektrodendurchführung 31 für die Elektrode 23 ergibt sich mit dem vorgegebenen Wert $X_E$ = 826,3 mm ein Winkel $\omega_E$ = 75,5°. Bei einem Kippwinkel $\omega$ von 5° ergeben sich neue Koordinaten für den Mittelpunkt der Elektrodendurchführung 31 zu $X_{E1}$ =

413,4 mm und $Z_{E1}$ = 3259,8 mm. Aufgrund des Kippens lassen sich somit Verschiebungen $\Delta X_E$ = -412,9 mm und $\Delta Z_E$ = 59,8 mm in X- bzw. Z-Richtung ermitteln. Bei einem Kippwinkel von -5° ergeben sich Werte für $X_{E1}$ = 1233,0 mm und $Z_{E1}$ = 3115,8 mm und damit Verschiebungen $\Delta X_E$ = 406,7 mm und $\Delta Z_E$ = -84,2 mm.

Für die in dem I. Quadranten liegende Elektrodendurchführung 31 für die Elektrode 25 ergibt sich bei vorgegebenem $X_E$ = 350,0 mm ein Winkel $\omega_E$ = 83,8°. Ein Kippwinkel von $\omega$ = 5° führt zu $X_{E1}$ = -61,1 mm, $Z_{E1}$ = 3218,3 mm und entsprechenden Verschiebungen $\Delta X_E$ = -411,1 mm und $\Delta Z_E$ = 18,3 mm. Bei einem Kippwinkel $\omega$ = 5° ergibt sich $X_{E1}$ = 758,5 mm, $Z_{E1}$ = 3157,3 mm sowie $\Delta X_E$ = 408,5 mm und $\Delta Z_E$ = -42,7 mm.

Für die im II. Quadranten liegende Elektrodendurchführung 31 für die Elektrode 27 ergibt sich mit einem vorgegebenen Wert $X_E$ = -126,3 mm ein Winkel $\omega_E$ = 92,3°. Bei einem Kippwinkel $\omega$ = 5° ergeben sich Koordinaten für den ausgelenkten Mittelpunkt der Elektrodendurchführung 31 zu $X_{E1}$ = -535,6 mm, $Z_{E1}$ = 3176,8 mm und den daraus resultierenden Verschiebungen $\Delta X_E$ = - 409,3 mm und $\Delta Z_E$ = -23,2 mm in X- bzw. Z-Richtung. Bei einem Kippwinkel $\omega$ = -5° ergeben sich Werte $X_{E1}$ = 284,0 mm, $Z_{E1}$ = 3198,8 mm, $\Delta X_E$ = 410,3 mm und $\Delta Z_E$ = -1,2 mm.

Der Mittelwert der Verschiebungen $\Delta X_E$, die sich für die Mittelpunkte der Elektrodendurchführungen 31 aller drei Elektroden 23, 25 und 27 aufgrund eines Kippwinkels $\omega$ = 5° ergeben, ergibt einen Wert $V_0$ = -411,1 mm und in entsprechender Weise für einen Kippwinkel $\omega$ = -5° einen Wert $V_0$ = 408,5 mm. Entsprechend den ermittelten Werten für $V_0$ sind die in Elektrodendurchführungen 31 eingreifenden Abschnitte der Elektroden 23, 25 und 27 während des Kippens mit dem Deckel 29 mitzuführen, damit ein Kontakt zwischen dem Dekkel 29 und den Elektroden 23, 25 und 27 vermieden ist.

Ausgehend von vorgegebenen Radien $R_0$ = 6700 mm und $R_1$ = 3500 mm kann die Verschiebung $V_0$ entsprechend dem letzten Ausdruck der oben stehenden Beziehungen für die Differenz F auf den Angriffspunkt der Kulissenführung 39, 41 umgerechnet werden. Die entsprechenden Werte ergeben sich für einen Kippwinkel $\omega$ = 5° zu $V_1$ = -214,8 mm und bei einem Kippwinkel $\omega$ = -5° zu $V_1$ = 213,4 mm.

Über die oben angegebenen Beziehungen für die zu minimierende Differenz F lassen sich Koordinaten $X_0$ = 700,0 mm und $Z_0$ = 955,0 mm für einen im I. Quadranten liegenden Eingriffspunkt $P_1$ der Kulissenführung 39, 41 ermitteln. Daraus ergibt sich ein Winkel $\omega$ = 53,8°. Aufgrund eines Kippens mit einem Kippwinkel $\omega$ = 5,0° ergibt sich eine Verschiebung des Punktes $P_1$ auf Koordinaten

$X_1$ = 483,2 mm und $Z_1$ = 1012,4 mm, so daß die Verschiebung in X- bzw. Z-Richtung $\Delta X$ = -216,8 mm bzw. $\Delta Z$ = 57,4 mm beträgt. Bei einem Kippen mit einem Kippwinkel $\omega$ = -5,0° ergeben sich Koordinaten $X_1$ = 911,5 mm, $Z_1$ = 890,4 mm bzw. Verschiebungen $\Delta X$ = 211,5 mm und $\Delta Z$ = -64,6 mm.

Ausgehend von Werten für Verschiebungen des Mittelpunktes der Elektrodendurchführungen 31 für die Elektroden 23 bzw. 27 bei einem Kippwinkel $\omega$ = 5° und $\omega$ = -5° von $\Delta X_E$ = 409,3 mm und $\Delta X_E$ = -412,9 mm ergeben sich ausgehend von den in die Beziehung für F eingesetzten Zahlenwerten F = -216,8 · 6700 / 3500 mm - 409,4 mm und F = 211,5 mm · 6700 / 3500 -412,9 mm Differenzen F = 5,7 mm und F = -8mm bei einem Kippwinkel von 5° bzw. -5°. Bei einem Spiel zwischen den Elektroden 23, 25 und 27 und den Elektrodendurchführungen 31 von etwa 50 mm stellen diese Werte im Rahmen einer betriebssicheren Mitführung der Elektroden 23, 25, 27 durch die Kulissenführung 39, 41 zulässige Abweichungen dar.

Die oben ermittelten Verschiebungen $\Delta Z$ in Z-Richtung führen zu einer im wesentlichen kräftefreien Verschiebung des Kulissensteins 41 in der Kulissenführung 39. In dem beschriebenen Ausführungsbeispiel ist der Ursprung 0 des XZ-Koordinatensystems und damit der Krümmungsmittelpunkt der Wälzwiege 3 wie in Fig. 2 dargestellt im Abstand e von dem Mittelpunkt 43 angeordnet; die Elektroden 23, 25 und 27 sind somit versetzt zu dem Krümmungsmittelpunkt 0 der Wälzwiege 3 angeordnet. Jede der drei Elektroden 23, 25 und 27 ist ferner über elektrische Anschlußleitungen 45, 47 und 49 und nicht dargestellte Schaltmittel so an Drehstrom anschließbar, daß beispielsweise die Elektrode 23 der Phase I, die Elektrode 25 der Phase II und die Elektrode 27 der Phase III zugeordnet ist.

Bei einem Kippen des Ofengefäßes 5 mit einem Drehwinkel $\omega$, der den angegebenen Wert von $\omega$ = ±6° überschreitet und für einen Abstich Werte im Bereich von etwa 15° bis 25° annimmt, ist ein Mitführen der Elektroden 23, 25 und 27 während des Kippens nicht mehr erforderlich, bzw. möglich. Die Elektroden 23, 25 und 27 werden deshalb durch Ausfahren der Kolben 19 in eine Lage oberhalb des Ofengefäßes 5 bzw. des Deckels 29 mit den Elektrodendurchführungen 31 gebracht. Mit dem Ausfahren der Elektroden 23, 25 und 27 kann eine elektrisch betätigte Koppeleinrichtung abgeschaltet werden; im Falle einer mechanisch wirkenden Koppeleinrichtung, beispielsweise der beschriebenen Kulissenführung 39, 41 kann die Koppeleinrichtung beispielsweise durch Ausrücken des Kulissensteins 41 aus der Führung 39 wirkungslos gemacht werden.

Vor dem Chargieren des Lichtbogenofens kann der Deckel 29 von dem Ofengefäß 5 über eine nicht näher dargestellte, an dem Portal 11 angeordnete, Hubvorrichtung abgehoben werden. Durch eine anschließende Horizontalbewegung aufgrund eines Verdrehens des Portals 11 kann der Deckel 29 dann aus dem Bereich des Ofengefäßes 5 gebracht werden.

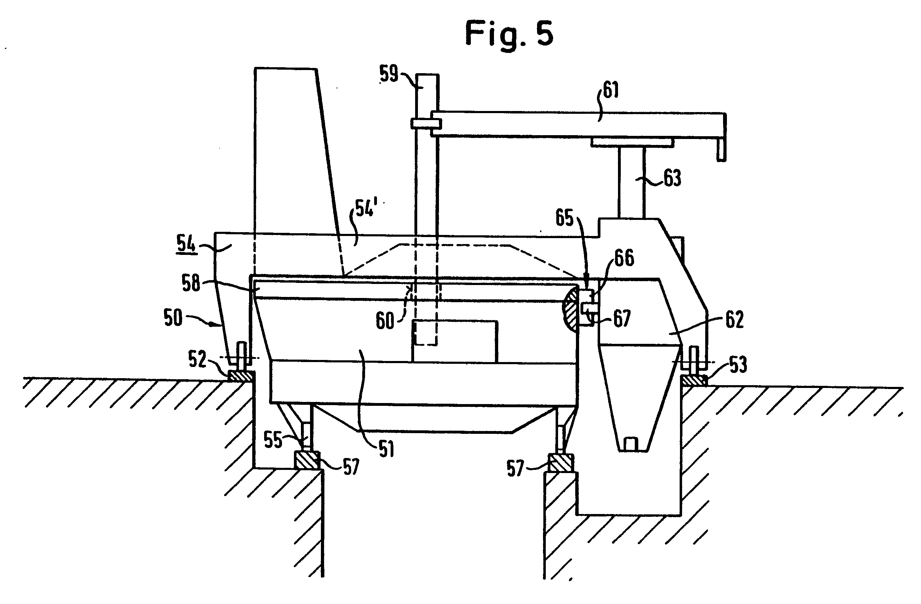

Bei dem in Fig. 5 dargestellten Ausführungsbeispiel mit einem insgesamt mit 50 bezeichneten Lichtbogenofen, ist einem Ofengefäß 51 ein linear auf Schienen 52, 53 verfahrbares Portal 54 zugeordnet. Entsprechend dem ersten Ausführungsbeispiel ist das Ofengefäß 51 über eine Wälzwiege 55 kippbar auf einem Fundament 57 gelagert. In das während eines Betriebes des Lichtbogenofens 50 durch einen Deckel 58 verschließbare Ofengefäß 51 ragt dabei mindestens eine Elektrode 59, die durch eine zugeordnete Elektrodendurchführung 60 in den Deckel 58 geführt ist. An ihrem durch die Elektrodendurchführung 60 aus dem Ofengefäß 51 ragenden Endabschnitt ist die Elektrode 59 über einen Tragarm 61 mit einer an dem Portal 54 angeordneten Haltevorrichtung 62 verbunden. Die Haltevorrichtung 62 erstreckt sich im wesentlichen in einer zu der Elektrode 59 parallelen Richtung und hat ein mit dem Tragarm 61 verbundenes Haltestück 63, das zum Ein- bzw. Ausfahren der Elektrode 59 in das Ofengefäß 51 in der Haltevorrichtung 62 verschieblich gelagert ist und das in dieser auch drehbar angeordnet sein kann.

Über eine Koppeleinrichtung 65 zwischen Ofengefäß 51 und Portal 54 ist, wie ausführlich im Zusammenhang mit dem ersten Ausführungsbeispiel beschrieben, eine Kippbewegung des Ofengefäßes 51 in eine Horizontalbewegung des Portals 54 umsetzbar. Während eines Kippens des Ofengefäßes 51 z.B. für ein Entfernen von Schlacken wird somit der in die Elektrodendurchführung 60 eingreifende Abschnitt der Elektrode 59 in horizontaler Richtung im wesentlichen entsprechend der Bewegung der Elektrodendurchführung 60 mitgeführt. Aufgrund dieser Mitführung ist es nicht erforderlich, bei einem Kippen des Ofengefäßes 51 zum Entschlacken, den Deckel 58 von dem Ofengefäß 51 abzuheben.

Zum Chargieren kann der Deckel 58 über eine lösbar mit dem Deckel 58 verbindbare, nicht näher dargestellte, an dem Portal 54 angeordnete Hubvorrichtung angehoben und mit dem Portal 54 aus dem Bereich des Ofengefäßes 51 gefahren werden. Die Hubvorrichtung kann dabei an dem den Deckel 58 überspannenden Tragbalken 54 des Portals 54 festgelegt sein.

Die Koppeleinrichtung 65 weist bei dem in Fig. 5 dargestellten Ausführungsbeispiel eine mit dem Ofengefäß 51 verbundene, im wesentlichen vertikal verlaufende Kulissenführung auf, mit einer Führung 66 und einem in diese eingreifenden, mit der Haltevorrichtung 62 verbundenen Kulissenstein 67 für eine mechanische Umsetzung einer Kippbewegung des Ofengefäßes 51 in eine Horizontalbewegung des Portals 54. Für möglichst geringe Abweichungen zwischen der Horizontalverschiebung der Elektrodendurchführung 60 aufgrund einer Kippbewegung des Ofengefäßes 51 mit dem Deckel 58 und dem in die Elektrodendurchführung 60 eingreifenden Abschnitt der Elektroden 59 können Führung 66 und Kulissenstein 67 mit Lagekoordinaten angeordnet werden, die entsprechend der betreffend das erste Ausführungsbeispiel mit numerischen Beispielen angegebenen Berechnungsmethode festgelegt werden können.

Neben der gemäß den obigen Ausführungsbeispielen eingesetzten mechanischen Koppeleinrichtungen mit einer Kulissenführung ist ein Mitführen der Elektroden während eines Kippens des Ofengefäßes mit dem Deckel auch ohne mechanische Über tragungsglieder möglich. Dazu ist es lediglich erforderlich, daß die Koppeleinrichtung der Kippbewegung des Ofengefäßes und der Horizontalbewegung des Portals zugeordnete Meßeinrichtungen und eine Stelleinrichtung, die beispielsweise eine Zylinder-Kolbenanordnung aufweisen kann, für eine Horizontalbewegung des Portals aufweist. Die Kippbewegung des Ofengefäßes kann in einfacher Weise über Kippwinkelgeber gemessen werden und für eine Messung der Horizontalbewegung des Portals können Weg- oder Drehwinkelgeber eingesetzt werden. Werden Zylinder-Kolbenanordnungen zum Kippen des Ofengefäßes bzw. Verdrehen bzw. Verschieben des Portals eingesetzt, dann ist es lediglich erforderlich, jeweils den entsprechenden Kolbenhub bei einem Kippen des Ofengefäßes bzw. bei einem Bewegen des Portals zu messen.

**Ansprüche**

1. Lichtbogenofen mit einem kippbar gelagerten Ofengefäß (5, 51), mit einem entfernbaren Dekkel (29, 58), mit wenigstens einer in das Ofengefäß durch eine zugeordnete Elektrodendurchführung (31, 60) des Deckels ragende Lichtbogenelektrode (23, 25, 27, 59) und mit einem nicht mitkippenden horizontal bewegbaren Portal (11, 54) das eine Hubvorrichtung (17, 62) für die Elektroden (23, 25, 27, 59) trägt, dadurch gekennzeichnet, daß über eine Koppeleinrichtung (37, 65) zwischen Ofengefäß (5, 51) und Portal (11, 54) eine Kippbewegung des Ofengefäßes (5, 51) in eine Horizontalbewegung des Portals (11, 54) so umsetzbar ist, daß während eines Kippens des Ofengefäßes (5, 51) die in die Elektrodendurchführungen (31, 60) eingreifenden Abschnitte der Elektroden (23, 25 27, 59) in horizontaler Richtung im wesentlichen entsprechend der Bewegung der Elektrodendurchführungen (31, 60) mitgeführt werden.

2. Lichtbogenofen nach Anspruch 1, dadurch gekennzeichnet, daß die Koppeleinrichtung (37, 65) so abgestimmt ist, daß für Kippwinkel $\omega$ in einem Bereich von etwa $\pm 6^\circ$ eine im wesentlichen fehlerfreie Mitführung erfolgt.

3. Lichtbogenofen nach Anspruch 1 oder 2, dadurch gekennzeichnet, daß die Koppeleinrichtung (37, 65) der Kippbewegung des Ofengefäßes (5, 51) und der Horizontalbewegung des Portals (11, 54) zugeordnete Meßeinrichtungen und eine Stelleinrichtung für eine Horizontalbewegung des Portals (11, 54) aufweist.

4. Lichtbogenofen nach Anspruch 1 oder 2, dadurch gekennzeichnet, daß die Koppeleinrichtung (37, 65) eine zwischen Ofengefäß (5, 51) und Portal (11, 54) angeordnete Kulissenführung (39, 41, 66, 67) zur mechanischen Umsetzung einer Kippbewegung des Ofengefäßes (5, 51) in eine Horizontalbewegung des Portals (11, 54) aufweist.

5. Lichtbogenofen nach Anspruch 4, dadurch gekennzeichnet, daß die Kulissenführung (39, 41, 66, 67) eine langlochförmig ausgebildete, im wesentlichen vertikal verlaufende Führung (39, 66) aufweist, die mit dem Ofengefäß (5, 51) oder dem Portal (11, 54) verbunden ist und in die ein mit dem Portal (11, 54) bzw. dem Ofengefäß (5, 51) verbundener Kulissenstein (41, 67) eingreift.

6. Lichtbogenofen nach einem der Ansprüche 1 bis 5, dadurch gekennzeichnet, daß die Koppeleinrichtung (37, 65) für ein Kippen des Ofengefäßes (5, 51) mit größeren Kippwinkeln $\omega$ von $15^\circ$ bis $25^\circ$ abschaltbar bzw. ausrückbar ist.

7. Lichtbogenofen nach Anspruch 4, dadurch gekennzeichnet, daß das horizontal bewegbare Portal als um eine Drehachse (13) drehbares Portal ausgebildet ist und die Kulissenführung (39, 41) in einer Höhe ($Z_0$) in Bezug auf die Wälzwiege (3) wirkt, bei der eine Differenz F bei Anordnung der Kulissenführung (39, 41) in einem I. oder IV. Quadranten (Fig. 4) gemäß der näherungsweisen Beziehung

$$F = -X_0 + \sqrt{X_0^2 + Z_0^2} \cdot \cos[\text{arc } \tan(Z_0/X_0) + \omega]$$
$$-R \cdot \pi \cdot \omega/180^\circ - V_0 \cdot R_1/R_0$$

und bei Anordnung der Kulissenführung (39, 41) in einem II. oder III. Quadranten (Fig. 4) gemäß der näherungsweisen Beziehung

$$F = -X_0 + \sqrt{X_0^2 + Z_0^2} \cdot \cos[\text{arc } \tan(Z_0/X_0) + 180^\circ + \omega] - R \cdot \pi \cdot \omega/180^\circ - V_0 \cdot R_1/R_0$$

zu einem Minimum wird, wobei die Formelzeichen folgende Größen bezeichnen:
$X_0$ und $Z_0$ sind die Koordinaten des Angriffspunktes ($P_1$, $P_2$, $P_3$, $P_4$) der Kulissenführung (39, 41) in ihrer Ruhelage in einem XZ-Koordinatensystem, dessen Ursprung 0 mit einem Krümmungsmittelpunkt der Wälzwiege (3) zusammenfällt und bei dem die X-Achse in einer Kipprichtung in Richtung von einer Abstichöffnung (35) und die Z-Achse senkrecht dazu in Richtung zu dem Deckel (29) verläuft,

$\omega_0$ ist der zwischen einer Geraden durch den Ursprung 0 sowie jeweils einem der Punkte $P_1$ bis $P_4$ und der X-Achse verlaufende Winkel in Grad,

$\omega$ ist der Kippwinkel in Grad,

R ist der Radius der Wälzwiege (3),

$V_0$ ist eine Verschiebung einer Elektrodendurchführung (31) in horizontaler Richtung aufgrund eines Kippwinkels $\omega$,

$R_0$ ist der Abstand zwischen der Drehachse (13) des Portals (11) und einem Mittelpunkt (43) zwischen den Mittelachsen der Elektroden (23, 25, 27) und

$R_1$ ist der Abstand zwischen der Drehachse (13) des Portals (11) und jeweils einem der Angriffspunkte $P_1$, $P_2$, $P_3$, $P_4$ der Kulissenführung (39, 41) an dem Ofengefäß (5).

8. Lichtbogenofen nach einem der Ansprüche 1 bis 7, dadurch gekennzeichnet, daß auf einem nebem dem Ofengefäß (5, 51) angeordneten verdreh- und/oder verfahrbaren Portal (11, 54) eine Hubvorrichtung befestigt ist, die wenigstens ein heb- und senkbares Tragglied enthält, das am Rand des Deckels (29, 58) oder an einer Haltekonstruktion des Dekkels angreift.

9. Lichtbogenofen nach Anspruch 8, dadurch gekennzeichnet, daß das Tragglied in der abgesenkten Position vom Rand des Deckels (29, 58) bzw. von dessen Haltekonstruktion gelöst ist und beim Anheben in eine der Form des Traggliedes angepaßte Hebeöse am Rand des Deckels bzw. der Haltekonstruktion eingreift.

10. Lichtbogenofen nach einem der Ansprüche 1 bis 6, 8 und 9 gekennzeichnet durch ein die Tragvorrichtung (61) tragendes, verfahrbares Portal (54) mit wenigstens einem den Deckel (58) überspannenden Tragbalken (54') und Hubvorrichtungen, die lösbar mit dem Deckel oder einer Haltekonstruktion des Deckels verbindbar sind.

# Fig. 1

EP 0 386 586 A2

# Fig. 2

## Fig. 3

## Fig. 4

Abstichseite    II. Q          I. Q    Schlackenseite

## Fig. 5

EP 0 386 586 A2